# EUROPEAN PATENT APPLICATION

(11) **EP 4 806 935 A1**
(43) Date of publication of application: **16.09.2026**
(21) Application number: 24888787.9
(22) Date of filing: 07.11.2024
(51) Int. Cl.: C08G 63/16, C08G 63/181, C08K 5/29, C08L 67/02, C08L 101/16

(54) **BIODEGRADABLE POLYESTER RESIN, BIODEGRADABLE POLYESTER RESIN COMPOSITION, AND MOLDED BODIES THEREOF**

(30) Priority: 08.11.2023 JP 2023190963
(71) Applicant: Kuraray Co., Ltd., Kurashiki-shi, Okayama 710-0801 (JP)
(72) Inventor: FUJII Yuki, Kurashiki-shi, Okayama 710-0801 (JP); OOGUMA Takashi, Kurashiki-shi, Okayama 710-0801 (JP); AMANO Yusuke, Kurashiki-shi, Okayama 710-0801 (JP); OKUI Yuya, Kurashiki-shi, Okayama 710-0801 (JP)
(74) Representative: Müller-Boré & Partner Patentanwälte PartG mbB
(86) International application number: PCT/JP2024/039654
(87) International publication number: WO 2025/100494

(57) **Abstract**

Provided are a biodegradable polyester resin, a biodegradable polyester resin composition, and molded bodies thereof, which have superior biodegradability and superior hydrolysis resistance, the biodegradable polyester resin, biodegradable polyester resin composition, and molded bodies thereof containing a structural unit derived from a dicarboxylic acid component (A) and a structural unit derived from an aliphatic diol component (B) and satisfying at least one of the following Conditions (α) and (β):
- Condition (α): the dicarboxylic acid component (A) contains a first dicarboxylic acid component (A1) constituted of at least one compound selected from the group consisting of an aliphatic dicarboxylic acid (a1) represented by the following formula (I) and a derivative thereof,
- Condition (β): the aliphatic diol component (B) contains a first aliphatic diol (B1) constituted of at least one compound selected from an aliphatic diol (b1) represented by the following formula (II): 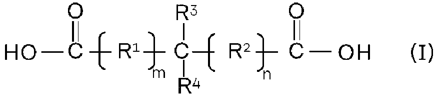 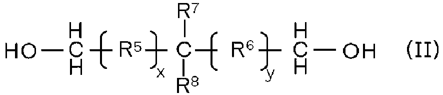 [the signs in the formulae (I) and (II) are as described in the description of this application.]

## Description

### Technical Field

The present invention relates to a biodegradable polyester resin, a biodegradable polyester resin composition, and molded bodies thereof.

### Background Art

In recent years, environmental problems, such as a concern about microplastics, have attracted attention. General synthetic resins, when are left in the environment, pulverize into fine powders by weathering due to ultraviolet radiation and the like, but are not completely degraded and continue to exist as microplastics, causing a problem of marine pollution. Biodegradable plastics called green plastics have recently been developed. Although polyesters, polyvinyl alcohol resins, and polyamino acids are known as such synthetic resins, only polyesters can currently be processed by melt-molding in a practical manner.

Examples of known biodegradable polyesters include aliphatic polyester resins, such as polybutylene succinate and polybutylene succinate adipate, an aliphatic hydroxycarboxylic acid resin, such as polylactic acid, and an aromatic-aliphatic-copolymerized polyester resin, such as polybutylene adipate terephthalate. While having superior biodegradability, these biodegradable polyester resins are inferior in storage stability due to the high degradability, leading to a problem in that the resins degrade in storage. Since the degradation is mainly caused by hydrolysis of the polyester resins, in general, an anti-hydrolysis agent is often used in combination therewith.

For example, PTL 1 proposes a configuration in which an anti-hydrolysis agent is combined with a polyester resin to improve hydrolysis resistance. PTL 2 proposes a technique in which a specific structure is incorporated into a polyester resin to improve hydrolysis resistance.

On the other hand, synthetic resins have recently been increasingly required to be adapted to the environment, and thus, a configuration in which the degradability of an existing polyester resin is further improved has been proposed. For example, PTL 3 shows that, by using a polyhydroxy alkanoate in combination with an aliphatic polyester resin, the rate of biodegradation at room temperature can be enhanced.

### Citation List

### Patent Literature

PTL 1: JP 5279352 B
PTL 2: JPH 10-130377 A
PTL 3: WO 2019/189367

### Summary of Invention

### Technical Problem

However, studies by the present inventors revealed that, in such a proposal to improve hydrolysis resistance as described in PTLs 1 and 2, the rate of biodegradation is reduced and a sufficient rate of biodegradation cannot be achieved in some environments. It has also been found that, in such a proposal to improve the rate of biodegradation as described in PTL 3, there remains a problem in that the storage stability of a resin is not ensured due to considerable deterioration in hydrolysis resistance.

The present invention is to solve the above problem, and an object of the present invention is to provide a biodegradable polyester resin, a biodegradable polyester resin composition, and molded bodies thereof, which have superior biodegradability and superior hydrolysis resistance.

### Solution to Problem

As a result of intensive and extensive studies for solving the above problems, the present inventors have achieved the present invention as described below and have found that the problems can be solved.

Specifically, the present invention includes the following inventions.
[1] A biodegradable polyester resin containing a structural unit derived from a dicarboxylic acid component (A) and a structural unit derived from an aliphatic diol component (B), the biodegradable polyester resin satisfying at least one of the following Conditions (α) and (β):
   Condition (α): the dicarboxylic acid component (A) contains a first dicarboxylic acid component (A1) constituted of at least one compound selected from the group consisting of an aliphatic dicarboxylic acid (a1) represented by the following formula (I) and a derivative thereof,
   Condition (β): the aliphatic diol component (B) contains a first aliphatic diol component (B1) constituted of at least one compound selected from an aliphatic diol (b1) represented by the following formula (II): 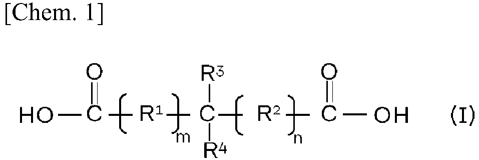 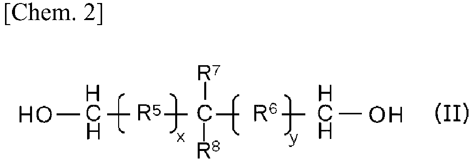 [in the formulae (I) and (II), R¹, R², R⁵, and R⁶ each independently represent a divalent hydrocarbon group having 1 to 3 carbon atoms, R³ and R⁷ each independently represent a monovalent hydrocarbon group having 1 to 3 carbon atoms, R⁴ and R⁸ each independently represent a hydrogen atom or a monovalent hydrocarbon group having 1 to 3 carbon atoms, and m, n, x, and y each independently represent 0 or 1.] [2] The biodegradable polyester resin according to the above [1], in which the dicarboxylic acid component (A) contains the first dicarboxylic acid component (A1) and a second dicarboxylic acid component (A2) constituted of one compound selected from the group consisting of a second dicarboxylic acid (a2) different from the aliphatic dicarboxylic acid (a1) and a derivative thereof, and
   the biodegradable polyester resin satisfies the following Condition (i) or (ii):
      Condition (i): the dicarboxylic acid contained in the second dicarboxylic acid component (A2) and the aliphatic diol contained in the aliphatic diol component (B) both have 4 or less carbon atoms,
      Condition (ii): the second dicarboxylic acid component (A2) contains an aromatic dicarboxylic acid.
[3] The biodegradable polyester resin according to the above [2], in which the second dicarboxylic acid component (A2) contains an aromatic dicarboxylic acid.
[4] The biodegradable polyester resin according to any one of the above [1] to [3], in which the dicarboxylic acid component (A) has a content of the aliphatic dicarboxylic acid (a1) of 2 to 60% by mole.
[5] The biodegradable polyester resin according to any one of the above [1] to [4], in which in the formula (I), R¹ and R² are both a methylene group.
[6] The biodegradable polyester resin according to any one of the above [1] to [5], in which in the formula (I), R³ is a methyl group and R⁴ is a hydrogen atom.
[7] The biodegradable polyester resin according to any one of the above [1] to [6], in which the aliphatic diol component (B) has a content of the first aliphatic diol component (B1) of 2 to 50% by mole.
[8] The biodegradable polyester resin according to any one of the above [1] to [7], in which in the formula (II), R⁵ and R⁶ are a methylene group.
[9] The biodegradable polyester resin according to any one of the above [1] to [8], in which in the formula (II), R⁷ is a methyl group and R⁸ is a hydrogen atom.
[10] The biodegradable polyester resin according to any one of the above [1] to [9], in which the dicarboxylic acid component (A) does not contain an aliphatic dicarboxylic acid (a2X) which has a branched alkylene group having a hydroxy group, or the dicarboxylic acid component (A) has a content of the aliphatic dicarboxylic acid (a2X) of more than 0% by mole and 3% by mole or less.
[11] The biodegradable polyester resin according to any one of the above [1] to [10], in which the dicarboxylic acid component (A) contains the first dicarboxylic acid component (A1), a second dicarboxylic acid component (A2) constituted of one compound selected from the group consisting of a second dicarboxylic acid (a2) different from the aliphatic dicarboxylic acid (a1) and a derivative thereof, a third dicarboxylic acid component (A3) constituted of one compound selected from the group consisting of a third dicarboxylic acid (a3) different from the aliphatic dicarboxylic acid (a1) and from the second dicarboxylic acid (a2) and a derivative thereof.
[12] The biodegradable polyester resin according to the above [11], in which the third dicarboxylic acid (a3) is methylsuccinic acid.
[13] A biodegradable polyester resin composition containing the biodegradable polyester resin according to any one of the above [1] to [12] and an anti-hydrolysis agent (C).
[14] The biodegradable polyester resin composition according to the above [13], in which the anti-hydrolysis agent (C) is a carbodiimide compound.
[15] The biodegradable polyester resin composition according to the above [13] or [14], in which the anti-hydrolysis agent (C) is contained in an amount of 0.15 to 2 parts by mass relative to 100 parts by mass of the biodegradable polyester resin.
[16] A molded body containing the biodegradable polyester resin according to any one of the above [1] to [12] or the biodegradable polyester resin composition according to any one of the above [13] to [15].
[17] A film containing the biodegradable polyester resin according to any one of the above [1] to [12] or the biodegradable polyester resin composition according to any one of the above [13] to [15].
[18] A sheet containing the biodegradable polyester resin according to any one of the above [1] to [12] or the biodegradable polyester resin composition according to any one of the above [13] to [15].
[19] A food tool containing the biodegradable polyester resin according to any one of the above [1] to [12] or the biodegradable polyester resin composition according to any one of the above [13] to [15].
[20] A plastic modifier containing the biodegradable polyester resin according to any one of the above [1] to [12] or the biodegradable polyester resin composition according to any one of the above [13] to [15].
[21] A coating agent containing the biodegradable polyester resin according to any one of the above [1] to [12] or the biodegradable polyester resin composition according to any one of the above [13] to [15].

### Advantageous Effects of Invention

According to the present invention, it is possible to provide a biodegradable polyester resin, a biodegradable polyester resin composition, and molded bodies thereof, which have superior biodegradability and superior hydrolysis resistance.

### Brief Description of Drawings

[Fig. 1] Fig. 1 is an example of a photograph of appearance of a polyester resin film after evaluation of composting ability.
[Fig. 2] Fig. 2 is an example of a photograph of appearance of another polyester resin film after evaluation of composting ability.
[Fig. 3] Fig. 3 is an example of a photograph of appearance of a polyester resin film after evaluation of hydrolysis resistance.
[Fig. 4] Fig. 4 is an example of a photograph of appearance of another polyester resin film after evaluation of hydrolysis resistance.

### Description of Embodiments

The present invention will be described below based on an example of embodiments of the present invention. However, the embodiment described below is as an example for embodying the technical idea of the present invention and the present invention is not limited to the following description.

While preferred aspects of an embodiment are shown in the present description, a combination of two or more individual preferred aspects is also a preferred aspect. When a matter represented by a numerical range is accompanied with multiple numerical ranges, one of the upper limits and one of the lower limits thereof can be selectively combined to make a preferred aspect.

An expression of "XX to YY" as a numerical range in the present description, if any, means "XX or more and YY or less".

### [Biodegradable polyester resin]

A biodegradable polyester resin according to an embodiment of the present invention is a biodegradable polyester resin containing a structural unit derived from a dicarboxylic acid component (A) and a structural unit derived from an aliphatic diol component (B), the biodegradable polyester resin satisfying at least one of the following Conditions (α) and (β).

Condition (α): the dicarboxylic acid component (A) contains a first dicarboxylic acid component (A1) constituted of at least one compound selected from the group consisting of an aliphatic dicarboxylic acid (a1) represented by the following formula (I) and a derivative thereof.

Condition (β): the aliphatic diol component (B) contains a first aliphatic diol component (B1) constituted of at least one compound selected from an aliphatic diol (b1) represented by the following formula (II). 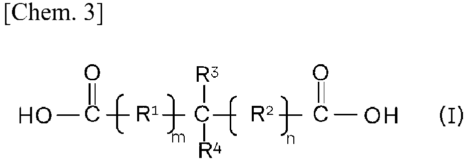 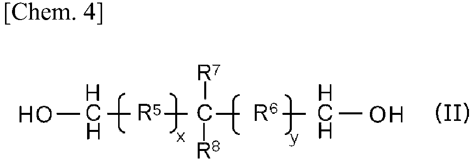 [In the formulae (I) and (II), R¹, R², R⁵, and R⁶ each independently represent a divalent hydrocarbon group having 1 to 3 carbon atoms, R³ and R⁷ each independently represent a monovalent hydrocarbon group having 1 to 3 carbon atoms, R⁴ and R⁸ each independently represent a hydrogen atom or a monovalent hydrocarbon group having 1 to 3 carbon atoms, and m, n, x, and y each independently represent 0 or 1.]

The aliphatic dicarboxylic acid (a1) represented by the formula (I) and the aliphatic diol (b1) represented by the formula (II) each have a branched structure. Accordingly, by the configuration in which the dicarboxylic acid component (A) contains the first dicarboxylic acid component (A1) constituted of at least one compound selected from the group consisting of the aliphatic dicarboxylic acid (a1) and a derivative thereof and/or the aliphatic diol component (B) contains the first aliphatic diol component (B1) constituted of at least one compound selected from the aliphatic diol (b1), the crystallinity of the resulting biodegradable polyester resin presumably tends to be reduced to improve the biodegradability thereof.

On the other hand, it is considered that, due to the branched structure of the aliphatic dicarboxylic acid (a1) and a derivative thereof, or the branched structure of the aliphatic diol (b1), or the both thereof, a degradation reaction of the biodegradable polyester resin is suppressed by the steric hindrance and the hydrolysis resistance can be enhanced while keeping the biodegradability.

As a result, the biodegradable polyester resin is presumed to be able to achieve both superior biodegradability and superior hydrolysis resistance. Due to the good biodegradability and hydrolysis resistance, the biodegradable polyester resin has high environmental adaptability and storage stability.

In the present description, "biodegradability" refers to a performance to be able to be finally degraded into water and carbon dioxide by microorganisms and the like, and encompasses, for example, a performance in which the mass is reduced in storage for a certain period of time in a composting environment. Thus, in the present description, "biodegradability" is sometimes referred to as "composting ability".

From the viewpoint of showing good biodegradability, when a composting test is performed with reference to JIS K6954:2008 and the weights of a resin or resin composition before the test and after 30 days are measured, a biodegradable polyester resin according to an embodiment of the present invention has a weight retention rate after the test of preferably 85% or less, more preferably 70% or less, further preferably 50% or less, and furthermore preferably 40% or less. The lower limit of the weight retention rate is ideally 0%, but, for example, a resin with a weight retention rate of 20% or more sufficiently satisfies the required performance. In other words, the weight retention rate after the composting test of the biodegradable polyester resin is preferably 0 to 85%, and may be 20 to 85%.

In a biodegradable polyester resin according to a preferred embodiment of the present invention, the dicarboxylic acid component (A) contains the first dicarboxylic acid component (A1) and a second dicarboxylic acid component (A2) constituted of one compound selected from the group consisting of a second dicarboxylic acid (a2) different from the aliphatic dicarboxylic acid (a1) and a derivative thereof, and the biodegradable polyester resin satisfies the following Condition (i) or (ii).

Condition (i): the number of carbon atoms of the dicarboxylic acid contained in the second dicarboxylic acid component (A2) and the number of carbon atoms of the aliphatic diol contained in the aliphatic diol component (B) are both 4 or less.

Condition (ii): the second dicarboxylic acid component (A2) contains an aromatic dicarboxylic acid.

In the biodegradable polyester resin according to the above embodiment, by further incorporating the second dicarboxylic acid component (A2) into the dicarboxylic acid component (A), other required properties, such as mechanical properties, can be easily imparted to the biodegradable polyester resin.

As in the above aspect, in comparison with the case where the dicarboxylic acid component (A) contains only the second dicarboxylic acid component (A2), the biodegradable polyester resin of the present embodiment is also said to be a case where at least a part of the second dicarboxylic acid component (A2) is replaced with the first dicarboxylic acid component (A1), and thus, the biodegradable polyester resin of the present embodiment is sometimes written as " the biodegradable polyester resin in which the dicarboxylic acid component (A) is modified with the first dicarboxylic acid component (A1)".

Hereinafter, components for obtaining the biodegradable polyester resin, the biodegradable polyester resin, a biodegradable polyester resin composition, and molded bodies thereof will be described in detail.

Note that, in the following description, for avoiding redundant repetition of the names of components, for example, the "dicarboxylic acid component (A)" is sometimes simply written as "component (A)".

### <Dicarboxylic acid component (A)>

The dicarboxylic acid component (A) contains the first dicarboxylic acid component (A1) constituted of the aliphatic dicarboxylic acid (a1) represented by the formula (I).

Preferably, the dicarboxylic acid component (A) contains the first dicarboxylic acid component (A1) and the second dicarboxylic acid component (A2) constituted of one compound selected from the group consisting of the second dicarboxylic acid (a2) different from the aliphatic dicarboxylic acid (a1) and a derivative thereof.

### (First dicarboxylic acid component (A1))

The first dicarboxylic acid component (A1) is constituted of at least one compound selected from the group consisting of the aliphatic dicarboxylic acid (a1) represented by the following formula (I) and a derivative thereof. Note that, in the following description, the aliphatic dicarboxylic acid (a1) represented by the formula (I) is sometimes simply referred to as "aliphatic dicarboxylic acid (a1)".

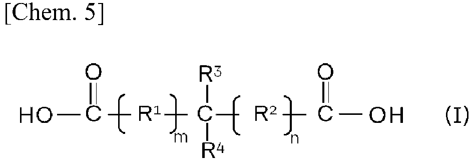

In the formula (I), R¹ and R² each independently represent a divalent hydrocarbon group having 1 to 3 carbon atoms.

Examples of the divalent hydrocarbon group having 1 to 3 carbon atoms represented by R¹ and R² include a methylene group, an ethylene group, a trimethylene group, and a methylethylene group.

In the formula (I), m and n each independently represent 0 or 1.

From the viewpoint of both achieving the rate of biodegradation and the hydrolysis resistance, it is preferred that both of m and n are 1 and both of R¹ and R² in the formula (I) are a methylene group.

In the formula (I), R³ represents a monovalent hydrocarbon group having 1 to 3 carbon atoms.

In the formula (I), R⁴ represents a hydrogen atom or a monovalent hydrocarbon group having 1 to 3 carbon atoms.

Examples of the monovalent hydrocarbon group having 1 to 3 carbon atoms represented by R³ and R⁴ include a methyl group, an ethyl group, a 1-propyl group, and a 2-propyl group. Among them, from the viewpoint of easily providing an appropriate steric hindrance, a methyl group is preferred.

In an aspect, in the formula (I), R³ is a methyl group and R⁴ is a hydrogen atom. In this case, the aliphatic dicarboxylic acid (a1) and a derivative thereof are liable to give an appropriate steric hindrance.

Examples of the aliphatic dicarboxylic acid (a1) include a 3-methylpentanedioic acid (synonym: 3-methylglutaric acid), methylsuccinic acid, methylmalonic acid, 2-methylglutatic acid, propylsuccinic acid, 3-ethylglutaric acid, 2-ethylglutaric acid, 3-propylglutaric acid, 2-propylglutaric acid, propylpropanedioic acid (synonym: propylmalonic acid), ethylpropanedioic acid (synonym: ethylmalonic acid), 2-methyladipic acid, and 3-methyladipic acid. Among them, from the viewpoints of the reduction in crystallinity and the steric hindrance, 3-methylpentanedioic acid is preferred.

Examples of the derivative of the aliphatic dicarboxylic acid (a1) include an acid anhydride of the aliphatic dicarboxylic acid (a1), an ester compound of the aliphatic dicarboxylic acid (a1), and an acid halide of the aliphatic dicarboxylic acid (a1).

Examples of the acid anhydride of the aliphatic dicarboxylic acid (a1) include 3-methylpentanedioic anhydride, 2-methylglutaric anhydride, and methylsuccinic anhydride.

A preferred example of the ester compound of the aliphatic dicarboxylic acid (a1) is a dialkyl ester of the aliphatic dicarboxylic acid (a1). Examples of the dialkyl ester include a dimethyl ester and a diethyl ester of the aliphatic dicarboxylic acid (a1).

A preferred example of the acid halide of the aliphatic dicarboxylic acid (a1) is a dihalide of the aliphatic dicarboxylic acid (a1). Preferred examples of the halogen atom constituting the acid halide include a chlorine atom and a bromine atom.

As the aliphatic dicarboxylic acid (a1) and a derivative thereof, one kind may be used alone or two or more kinds may be used, but, from the viewpoint of easily exhibiting expected properties, one kind is preferably used alone.

### (Second dicarboxylic acid component (A2))

As described above, the dicarboxylic acid component (A) which is used for obtaining a biodegradable polyester resin according to a preferred embodiment of the present invention contains the first dicarboxylic acid component (A1) and the second dicarboxylic acid component (A2) constituted of one compound selected from the group consisting of the second dicarboxylic acid (a2) different from the aliphatic dicarboxylic acid (a1) and a derivative thereof.

The second dicarboxylic acid (a2) may be an aliphatic dicarboxylic acid, an alicyclic dicarboxylic acid, or an aromatic dicarboxylic acid. An aliphatic dicarboxylic acid or an aromatic dicarboxylic acid is more preferred.

Examples of the second dicarboxylic acid (a2) include aliphatic dicarboxylic acids, such as succinic acid, glutaric acid, adipic acid, pimelic acid, suberic acid, azelaic acid, and sebacic acid; an alicyclic dicarboxylic acid, such as cyclohexanedicarboxylic acid; and aromatic dicarboxylic acids, such as phthalic acid, terephthalic acid, isophthalic acid, and naphthalenedicarboxylic acid. Among them, succinic acid, adipic acid, and terephthalic acid are preferred.

Examples of the derivative of the second dicarboxylic acid (a2) include an acid anhydride of the aliphatic dicarboxylic acid, an ester compound of the aliphatic dicarboxylic acid, an acid halide of the aliphatic dicarboxylic acid, an acid anhydride of the alicyclic dicarboxylic acid, an ester compound of the alicyclic dicarboxylic acid, an acid halide of the alicyclic dicarboxylic acid, an acid anhydride of the aromatic dicarboxylic acid, an ester compound of the aromatic dicarboxylic acid, and an acid halide of the aromatic dicarboxylic acid.

From the viewpoint of easily enhancing the softness of the biodegradable polyester resin, the second dicarboxylic acid component (A2) preferably contains an aromatic dicarboxylic acid.

One kind thereof may be used alone or two or more kinds thereof may be used.

When the dicarboxylic acid component (A) contains the second dicarboxylic acid component (A2), it is preferred that, as defined in the Condition (i), both of the number of carbon atoms of the dicarboxylic acid contained in the second dicarboxylic acid component (A2) and the number of carbon atoms of the aliphatic diol contained in the aliphatic diol component (B) are 4 or less, or that, as defined in the Condition (ii), the second dicarboxylic acid component (A2) contains an aromatic dicarboxylic acid.

Examples of the dicarboxylic acid having 4 or less carbon atoms as defined in the Condition (i) include succinic acid, malonic acid, and oxalic acid, and succinic acid is preferred.

The total mass of the first dicarboxylic acid component (A1) and the second dicarboxylic acid component (A2) in the dicarboxylic acid component (A) is, when the entire mass of the dicarboxylic acid component (A) is taken as 100% by mass, preferably 80% by mass or more, more preferably 85% by mass or more, and further preferably 90% by mass or more. The upper limit is not particularly limited, and may be 100% by mass or less, 98% by mass or less, or 95% by mass or less. In other words, the total mass of the first dicarboxylic acid component (A1) and the second dicarboxylic acid component (A2) in the dicarboxylic acid component (A) is preferably 80 to 100% by mass.

The content of the aliphatic dicarboxylic acid (a1) in the dicarboxylic acid component (A) (or the rate of modification), in other words, the content of the first dicarboxylic acid component (A1) in the dicarboxylic acid component (A) (or the rate of modification) is, from the viewpoint of easily enhancing the biodegradability and the hydrolysis resistance, preferably 2 to 80% by mole, more preferably 2 to 70% by mole, further preferably 2 to 60% by mole, furthermore preferably 3 to 60% by mole, and particularly preferably 3 to 58% by mole.

From the viewpoint that the biodegradable polyester resin easily has an appropriate molecular weight, it is preferred that the dicarboxylic acid component (A) does not contain an aliphatic dicarboxylic acid (aliphatic dicarboxylic acid (a2X)) that has a branched alkylene group having a hydroxy group as the second dicarboxylic acid component (A2) or that the content of the aliphatic dicarboxylic acid (a2X) in the dicarboxylic acid component (A) is more than 0% by mole and 3% by mole or less.

An example of the aliphatic dicarboxylic acid (a2X) is 3-hydroxy-3-methylglutaric acid.

In a biodegradable polyester resin according to a preferred embodiment of the present invention, the dicarboxylic acid component (A) may contain the first dicarboxylic acid component (A1), the second dicarboxylic acid component (A2), and a third dicarboxylic acid component (A3) constituted of one compound selected from the group consisting of a third dicarboxylic acid (a3) different from the aliphatic dicarboxylic acid (a1) and from the second dicarboxylic acid (a2) and a derivative thereof.

An example of the third dicarboxylic acid (a3) is 2-methylsuccinic acid.

### <Aliphatic diol component (B)>

The aliphatic diol component (B) contains the first aliphatic diol component (B1) constituted of at least one compound selected from the aliphatic diol (b1) represented by the formula (I).

Preferably, the aliphatic diol component (B) contains the first aliphatic diol component (B1) and a second diol component (B2) constituted of one compound selected from a second diol (b2) different from the aliphatic diol (b1).

### (First aliphatic diol component (B1))

The first aliphatic diol component (B1) is constituted of at least one compound selected from the aliphatic diol (b1) represented by the following formula (II). Note that, in the following description, the aliphatic diol (b1) represented by the formula (II) is sometimes simply referred to as "aliphatic diol (b1)".

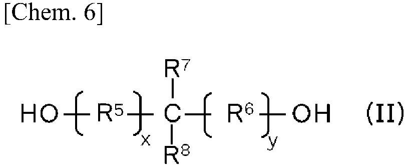

In the formula (I), R⁵ and R⁶ each independently represent a divalent hydrocarbon group having 1 to 3 carbon atoms.

Examples of the divalent hydrocarbon group having 1 to 3 carbon atoms represented by R⁵ and R⁶ include a methylene group, an ethylene group, a trimethylene group, and a methylethylene group. R⁵ and R⁶ are preferably a methylene group.

In the formula (II), x and y each independently represent 0 or 1.

From the viewpoint of achieving both the rate of biodegradation and the hydrolysis resistance, it is preferred that both of x and y are 1 and both of R⁵ and R⁶ in the formula (I) are a methylene group.

In the formula (II), R⁷ represents a monovalent hydrocarbon group having 1 to 3 carbon atoms.

In the formula (II), R⁸ represents a hydrogen atom or a monovalent hydrocarbon group having 1 to 3 carbon atoms.

Examples of the monovalent hydrocarbon group having 1 to 3 carbon atoms represented by R⁷ and R⁸ include a methyl group, an ethyl group, a 1-propyl group, and a 2-propyl group. Among them, from the viewpoint of easily providing an appropriate steric hindrance, a methyl group is preferred.

In an aspect, in the formula (II), R⁷ is a methyl group and R⁸ is a hydrogen atom. In this case, the aliphatic diol (b1) is liable to give an appropriate steric hindrance.

Examples of the aliphatic diol (b1) include propylene glycol, 2-methyl-1,3-propanediol, 1,3-butylene glycol, 2-methyl-1,4-butanediol, 2-isopropyl-1,4-butanediol, 3-methyl-1,5-pentanediol, 2-methyl-1,8-octanediol, 2,7-dimethyl-1,8-octanediol, 2-methyl-1,9-nonanediol, 2,8-dimethyl-1,9-nonanediol, 2,2-diethyl-1,3-propanediol, 2-butyl-2-ethyl-1,3-propanediol, and neopentyl glycol. Among them, from the viewpoints of the reduction in crystallinity and the steric hindrance, 3-methyl-1,5-pentanediol is preferred.

As the aliphatic diol (b1), one kind may be used alone or two or more kinds may be used, and from the viewpoint of easily exhibiting expected properties, one kind is preferably used alone.

### (Second diol component (B2))

As described above, the aliphatic diol component (B) used for obtaining a biodegradable polyester resin according to a preferred embodiment of the present invention contains the first aliphatic diol component (B1) and the second diol component (B2) constituted of one compound selected from the second diol (b2) different from the aliphatic diol (b1).

The second diol (b2) may be an aliphatic diol or an alicyclic diol.

Examples of the second diol (b2) include aliphatic diols, such as ethylene glycol, 1,3-propanediol, 1,4-butanediol, 1,5-pentanediol, 1,6-hexanediol, 1,7-heptanediol, 1,8-octanediol, 1,9-nonanediol, and 1,10-decanediol; and an alicyclic diol, such as cyclohexanedimethanol. Among them, ethylene glycol and 1,4-butanediol are preferred.

One kind thereof may be used alone or two or more kinds thereof may be used.

When the aliphatic diol component (B) contains the second diol component (B2), the number of carbon atoms of the aliphatic diol (b1) which is the first aliphatic diol component (B1) and the number of carbon atoms of the second diol (b2) which is the second diol component (B2) are preferably 6 or less. Furthermore, when the aliphatic diol component (B) contains the second diol component (B2) and the dicarboxylic acid component (A) contains the second dicarboxylic acid component (A2), it is preferred that, as defined in the Condition (i), the number of carbon atoms of the dicarboxylic acid contained in the second dicarboxylic acid component (A2) is 4 or less, or that, as defined in the Condition (ii), the number of carbon atoms of the dicarboxylic acid contained in the second dicarboxylic acid component (A2) is 6 or less.

Examples of the diol having 4 or less carbon atoms include ethylene glycol, 1,3-propnaediol, and 1,4-butanediol, and butanediol is preferred.

The total mass of the first aliphatic diol component (B1) and the second diol component (B2) in the aliphatic diol component (B) is, when the entire mass of the aliphatic diol component (B) is taken as 100% by mass, preferably 80% by mass or more, more preferably 85% by mass or more, and further preferably 90% by mass or more. The upper limit is not particularly limited, and may be 100% by mass or less, 98% by mass or less, or 95% by mass or less. In other words, the total mass of the first aliphatic diol component (B1) and the second diol component (B2) in the aliphatic diol component (B) is preferably 80 to 100% by mass.

The content of the aliphatic diol (b1) in the aliphatic diol component (B) (or the rate of modification), in other words, the content of the first aliphatic diol component (B1) in the aliphatic diol component (B) (or the rate of modification) is, from the viewpoint of easily enhancing the biodegradability and the hydrolysis resistance, preferably 2 to 80% by mole, more preferably 2 to 70% by mole, further preferably 2 to 60% by mole, furthermore preferably 3 to 60% by mole, and particularly preferably 2 to 50% by mole.

### <Content of structural units derived from components (A) and (B) in resin>

The total content of the mass of the structural unit derived from the dicarboxylic acid component (A) and the mass of the structural unit derived from the aliphatic diol component (B) in the biodegradable polyester resin according to the present embodiment is, from the viewpoint of easily ensuring good biodegradability and hydrolysis resistance, when the mass of the biodegradable polyester resin is taken as 100% by mass, preferably 70% by mass or more, more preferably 75% by mass or more, and further preferably 80% by mass or more. The upper limit is not particularly limited, and may be 100% by mass or less, 95% by mass or less, or 90% by mass or less. In other words, the total proportion of the mass of the structural unit derived from the dicarboxylic acid component (A) and the mass of the structural unit derived from the aliphatic diol component (B) in the biodegradable polyester resin according to the present embodiment is preferably 70 to 100% by mass.

### (Other components)

The biodegradable polyester resin according to the present embodiment may contain other components.

Examples of the other components include an inorganic filler, a softening agent, a thermal aging resister, an antioxidant, a photostabilizer, an antistatic agent, a mold release agent, a flame retardant, a foaming agent, a pigment, a dye, a brightening agent, a UV absorber, a lubricant, a thermoplastic agent, a crosslinking agent, a filler, a crosslinking promotor, a crosslinking aid, a tackifier, an adhesion imparting agent, an organic filler, a crystal nucleating agent, a heat-resistant stabilizer, a coloring agent, an auxiliary flame retardant, an anti-blooming agent, a thickener, a conductive auxiliary, and a fluidity modifier. However, an anti-hydrolysis agent (C) to be described later is not included in the other components which can be contained in the biodegradable polyester resin.

One kind thereof may be used alone or two or more kinds thereof may be used in combination.

The content of the other components may be appropriately set according to the desired properties of the biodegradable polyester resin, but, from the viewpoint of easily exhibiting expected properties of the biodegradable polyester resin, when the biodegradable polyester resin is taken as 100% by mass, is preferably 0.001 to 30% by mass, more preferably 0.005 to 25% by mass, further preferably 0.07 to 20% by mass, furthermore preferably 0.01 to 15% by mass, furthermore preferably 0.01 to 10% by mass, and particularly preferably 0.01 to 5% by mass.

### <Properties of biodegradable polyester resin>

### (Biodegradability)

As described above, when a composting test is performed with reference to JIS K6954:2008 and the weights of a resin or resin composition before and after the test are measured, the biodegradable polyester resin preferably has a weight retention rate after the test of 0 to 85% or less.

### (Number average molecular weight (Mn))

From the viewpoints of strength and handleability, the biodegradable polyester resin has an Mn of preferably 2,000 to 100,000, more preferably 3,000 to 80,000, further preferably 4,000 to 60,000, and furthermore preferably 5,000 to 50,000.

In the present description, the Mn of the biodegradable polyester resin is a number average molecular weight determined based on standard polymethyl methacrylate resins (PMMA) by a size exclusion high performance liquid chromatography measurement, and specifically, is measured by a method described in the section of Examples.

### (Weight average molecular weight (Mw))

From the viewpoint of strength and handleability, the biodegradable polyester resin has an Mw of preferably 5,000 to 200,000, more preferably 10,000 to 150,000, further preferably 15,000 to 120,000, and furthermore preferably 20,000 to 100,000.

In the present description, the Mw of the biodegradable polyester resin is a number average molecular weight determined based on standard polymethyl methacrylate resins (PMMA) by a size exclusion high performance liquid chromatography measurement, and specifically, is measured by a method described in the section of Examples.

### (Solution intrinsic viscosity (IV))

The solution intrinsic viscosity (IV) of the biodegradable polyester resin at 30°C is, from the viewpoint of easily achieving an appropriate molecular weight, preferably 0.90 to 1.05 dl/g, more preferably 0.91 to 1.04 dl/g, and further preferably 0.92 to 1.03 dl/g.

The IV is measured by a method described in the section of Examples.

### (Elongation at break)

From the viewpoint of ensuring good softness, the biodegradable polyester resin desirably has a high elongation at break, and preferably has an elongation at break of 200% or more, more preferably 300% or more, further preferably 400% or more, and furthermore preferably 500% or more. The upper limit of the elongation at break is not particularly limited, but from the viewpoint of strength, is, for example, 1,000% or less, 900% or less, or 800% or less. In other words, the elongation at break of the biodegradable polyester resin is preferably 200 to 1,000%.

When a high softness is not required for the biodegradable polyester resin according to the use, the elongation at break of the biodegradable polyester resin is, for example, 10 to 100%, 12 to 70%, or 13 to 50%.

The elongation at break is measured by a method described in the section of Examples.

### (Hydrolysis resistance)

From the viewpoint of easily enhancing the storage stability, the biodegradable polyester resin desirably has a hydrolysis resistance as high as possible, as defined by a molecular weight retention rate after immersing the biodegradable polyester resin having a prescribed shape in hot water for a prescribed period of time. More specifically, when the biodegradable polyester resin is processed into a film form with a prescribed size and is immersed into hot water of 80°C, the molecular weight retention rate after 4 days is preferably 76% or more, more preferably 78% or more, and further preferably 80% or more, and the molecular weight retention rate after 7 days is preferably 55% or more, more preferably 58% or more, and further preferably 60% or more. The upper limits of the molecular weight retention rates after 4 days and 7 days may be 100%, 95%, or 90%. In other words, the hydrolysis resistance (after 4 days) of the biodegradable polyester resin is preferably 80 to 100% and the hydrolysis resistance (after 7 days) thereof is preferably 60 to 100%.

The hydrolysis resistance is measured by a method described in the section of Examples.

### <Method for producing biodegradable polyester resin>

The method for producing the polyester of the present invention is not particularly limited, and a known polyester polycondensation method can be adopted. For example, 3-methylpentanedioic acid or a derivative thereof and a diol component are charged at a prescribed ratio, and are subjected to an esterification or a transesterification reaction, and the resulting reaction product is further subjected to a polycondensation reaction under a high temperature in vacuum in the presence of a polycondensation catalyst, whereby a polyester having a desired molecular weight can be produced. As the polycondensation catalyst used in production of the polyester, a wide variety of catalysts can be used. Examples of the polycondensation catalyst include titanium compounds, such as titanium tetramethoxide, titanium tetraethoxide, titanium tetra-n-propoxide, titanium tetraisopropoxide, and titanium tetrabutoxide; tin compounds, such as di-n-butyltin oxide, di-n-butyltin dilaurate, and dibutyltin diacetate; and a combination of an acetate of magnesium, calcium, zinc, or the like and antimony oxide or a titanium compound as described above. The polycondensation catalyst is preferably used in an amount in the range of 5 to 500 ppm by mass relative to the entire polyester produced.

The ratio MA:MB of the amount MA of the dicarboxylic acid component (A) by mole and the amount MB of the aliphatic diol component (B) by mole used for the polycondensation reaction is preferably 0.8:1.0 to 1.0:0.8, more preferably 0.9:1.0 to 1.0:0.9, and further preferably 0.95:1.0 to 1.0:0.95. When the dicarboxylic acid component (A) and the aliphatic diol component (B) are each constituted of a plurality of kinds of compounds, the above amounts by mole are each the arithmetic average of the amounts by mole of the plurality of kinds of compounds.

### [Biodegradable polyester resin composition]

A biodegradable polyester resin composition according to an embodiment of the present invention contains the biodegradable polyester resin and an anti-hydrolysis agent (C). By incorporating the anti-hydrolysis agent (C), hydrolysis reaction of the biodegradable polyester resin composition is suppressed, and a good durability is easily achieved.

The content of the biodegradable polyester resin in the biodegradable polyester resin composition is, based on 100% by mass of the total mass of the biodegradable polyester resin composition, preferably 35 to 99.8% by mass, more preferably 45 to 99.5% by mass, and further preferably 50 to 99% by mass.

### <Anti-hydrolysis agent (C)>

The anti-hydrolysis agent (C) is not particularly limited as long as it is a component that has a nature to prevent hydrolysis, and a known anti-hydrolysis agent can be used.

Examples of the anti-hydrolysis agent (C) include an oxazoline group-containing compound (oxazoline compound), an epoxy group-containing compound (epoxy compound), and a carbodiimide group-containing compound (carbodiimide compound). Among them, from the viewpoints of hydrolysis resistance and moldability, the anti-hydrolysis agent (C) is preferably a carbodiimide compound.

Examples of the carbodiimide compound include dicyclohexylcarbodiimide, diisopropylcarbodiimide, dimethylcarbodiimide, diisobutylcarbodiimide, dioctylcarbodiimide, t-butylisopropylcarbodiimide, diphenylcarbodiimide, di-t-butylcarbodiimide, di-β-naphthylcarbodiimide, polycarbodiimide, and a carbodiimide having a cyclic structure.

The polycarbodiimide is a compound in which two or more carbodiimide groups are bonded via a linking group constituted of an aliphatic group, an alicyclic group, an aromatic group, or a combination thereof.

The carbodiimide having a cyclic structure is a compound which has one or more carbodiimide group in the molecular structure and in which the first nitrogen atom and the second nitrogen atom of the carbodiimide group are bonded via a linking group constituted of an aliphatic group, an alicyclic group, an aromatic group, or a combination thereof to form a cyclic structure. The linking group may have a hetero atom or a substituent.

As the anti-hydrolysis agent (C), only one kind may be used or two or more kinds may be used.

The content of the anti-hydrolysis agent (C) is, from the viewpoint of easily enhancing hydrolysis resistance while retaining good biodegradability, relative to 100 parts by mass of the biodegradable polyester resin, preferably 0.15 to 2 parts by mass, more preferably 0.15 to 1.8 parts by mass, further preferably 0.18 to 1.5 parts by mass, and furthermore preferably 0.18 to 1.2 parts by mass.

### <Other resins>

A biodegradable polyester resin composition according to an embodiment of the present invention may contain a resin other than the biodegradable polyester resin, and, for example, a biomass resin or a biodegradable resin may be contained.

Examples of the biomass resin or biodegradable resin include polylactic acid(PLA), polycaprolactone (PCL), polybutylene succinate (PBS), polybutylene succinate adipate (PBSA), polybutylene adipate terephthalate (PBAT), polyglycolic acid (PGA), polyethylene furanoate (PEF), a polyhydroxyalkanoate (PHA) [for example, polyhydroxybutyrate-valerate (PHBV), 3-hydroxybutyric acid-3-hydroxyhexanoic acid copolymer polyester], and polysaccharides, such as cellulose acetate (CA) and starch. A biodegradable polymer, such as a 3-hydroxybutanoic acid-based polymer or a β-methyl-δ-valerolactone-based polymer, may be contained.

The content of the other resins in the biodegradable polyester resin composition is, from the viewpoint of effectively achieving the effects of the present invention, based on 100 parts by mass of the total of the biodegradable polyester resin and the other resins, preferably less than 50 parts by mass, more preferably 40 parts by mass or less, and further preferably 30 parts by mass or less. The lower limit is not particularly limited, but, for example, is 5 parts by mass or more. In other words, the content of the other resins is, based on 100 parts by mass of the total of the biodegradable polyester resin and the other resins, preferably 5 parts by mass or more and less than 50 parts by mass.

### <Other additives>

As additives, other than the anti-hydrolysis agent (C), which can be contained in a biodegradable polyester resin composition according to an embodiment of the present invention (hereinafter referred to as "other additives"), those exemplified above as the other components which can be contained in the biodegradable polyester resin can be used.

The content of the additives other than the anti-hydrolysis agent (C) in the biodegradable polyester resin composition may be appropriately set according to the desired properties of the biodegradable polyester resin composition, but, from the viewpoint of, for example, easily exhibiting an expected performance of the biodegradable polyester resin composition, when the biodegradable polyester resin composition is taken as 100% by mass, is preferably 0.001 to 30% by mass, more preferably 0.005 to 25% by mass, further preferably 0.007 to 20% by mass, furthermore preferably 0.01 to 15% by mass, furthermore preferably 0.01 to 10% by mass, and particularly preferably 0.01 to 5% by mass.

### <Properties of biodegradable polyester resin composition>

The "biodegradability", "elongation at break", and "hydrolysis resistance" of the biodegradable polyester resin composition are the same as described for the properties of the biodegradable polyester resin.

That is, regarding the biodegradability of the biodegradable polyester resin composition, when a composting test is performed with reference to JIS K6954:2008 and the weights of a resin or resin composition before and after the test are measured, the biodegradable polyester resin composition preferably has a weight retention rate after the test of 0 to 85% or less.

The elongation at break of the biodegradable polyester resin composition is, when a high softness is required, preferably 200 to 1,000%, and when a high softness is not required, for example, 10 to 100%.

Regarding the hydrolysis resistance of the biodegradable polyester resin composition, the hydrolysis resistance, which is defined as a molecular weight retention rate after immersing the biodegradable polyester resin having a prescribed shape in hot water for a prescribed period of time, is preferably 80 to 100% (after 4 days) and is preferably 60 to 100% (after 7 days).

### <Method for producing biodegradable polyester resin composition>

A method for producing the biodegradable polyester resin composition according to the present embodiment is not particularly limited, and the biodegradable polyester resin, the anti-hydrolysis agent (C), and additives, as needed, may be uniformed mixed.

Examples of the mixing method include a method of melt-kneading with a single screw extruder, a multi-screw extruder, a Banbury mixer, a heating roll, a Brabender, or various kneaders, and a method in which components are fed from different inlet ports and are melt-kneaded.

Components may also be pre-blended before melt-kneading. Examples of the pre-blending method include methods with a mixer, such as a Henschel mixer, a high speed mixer, a V blender, a ribbon blender, a tumbler blender, or a conical blender.

The temperature in melt-kneading can be arbitrarily selected, in view of the melting point and the degradation temperature of the biodegradable polyester resin, and is preferably in the range of 130 to 200°C.

### [Molded body]

A molded body according to an embodiment of the present invention contains the biodegradable polyester resin or the biodegradable polyester resin composition.

The shape of the molded body may be any as long as the molded body can be produced by using the biodegradable polyester resin or the biodegradable polyester resin composition. Examples of the molded body include molded bodies of various shapes, such as a pellet-, film-, sheet-, plate-, pipe-, tube-, and bottle-shape, and a fibrous-, bar-, fine particle-, particulate-, and foam-form. The method for producing the molded body is not particularly limited, and the molded body can be formed by a known method, for example, various molding methods, such as injection molding, blow molding, press molding, extrusion, calendar molding, and molding with a 3D printer.

When the molded body is a film, the thickness thereof is, for example, 5 to 500 µm, 25 to 300 µm, or 50 to 200 µm.

### [Uses]

The biodegradable polyester resin, the biodegradable polyester resin composition, and the molded bodies thereof, of the present embodiment can be used for various uses.

Examples of the uses of the biodegradable polyester resin, biodegradable polyester resin composition, and molded bodies thereof include:
disposable or reusable food tools, such as a food bag, a food cap, a food tray, a straw, cutlery, a food container, a coffee capsule, and a bottle;
stoppers and cap liners of containers for storing foods, drinks, drugs, and the like,;
monolayered or multilayered films and sheets for an electronic component packaging material, a medicine packaging material, a food packaging material such as a food packaging film, an agricultural material, such as an agricultural multi-film or a composting bag, a civil engineering and construction material, an industrial material, and the like;
daily goods, such as a seedling pot, a cosmetic container, a detergency container, a bleach container, a shopping bag, and a trash bag, and industrial materials, such as a laminate film, a plate, a stretched sheet, a sanitary cover stock material, outdoor leisure goods, a water retention sheet, a cold insulation box, a cushion film, and synthetic paper;
fibers, such as a fishing line, a fishing net, a vegetation net, a monofilament, a flat yarn, a staple, a crimped fiber, a tape with line, a split yarn, a rope, a binding material, a composite fiber, a fabric, and a nonwoven fabric;
tackifiers (tackiness imparting agents) and adhesives (adhesion imparting agents) of a solvent type, a hot-melt type, a hot drawing type, and the like;
coating agents of an aqueous type, a solution type, an emulsion type, a dispersion type, and the like;
medical materials, such as a surgical thread, a suture, an artificial bone, an artificial skin, DDS such as a microcapsule, and a wound dressing material;
a filament for 3D printer;
a toner for development;
a supporting material in hydraulic fracture, and a flood water preventing agent in excavation;
various vibration proof or vibration control members, such as a vibration proof rubber, mat, sheet, cushion, damper, pad, and mount rubber;
a housing or other members in a domestic appliance, such as a television, a stereo, a cleaner, or a refrigerator, or in a cell phone;
a skin of a bumper component, a body panel, a weather strip, a grommet, an instrument panel, and the like, and an automobile interior or exterior component, such as an airbag cover;
various grips of scissors, a screwdriver, a toothbrush, ski poles, and the like; and
a plastic modifier.

### Examples

The present invention will be described in more detail below with reference to examples, but the present invention is in no way limited to the examples.

### [Calculation of content]

A nuclear magnetic resonance apparatus "Avance 600" manufactured by JOEL, Ltd. was used to measure ¹H-NMR of a polyester resin at 323K in trifluoroacetic acid as a solvent, and the content of the aliphatic dicarboxylic acid (a1) and a derivative thereof was calculated according to the following expression (F1). $\begin{matrix}Ratio of aliphatic dicarboxylic acid \left(a1\right) and derivative thereof \left(% by mole\right) \\ = \left(Integrated value of aliphatic dicarboxylic acid \left(a1\right)/Number of protons\right) \times 100 / \left[\left(\begin{matrix}Integrated \\ value of aliphatic dicarboxylic acid \left(a1\right) / Number of protons\end{matrix}\right)+\left(\begin{matrix}Integrated value of second \\ dicarboxylic acid \left(a2\right) / Number of protons\end{matrix}\right)\right]\end{matrix}$

However, the integrated value of the aliphatic dicarboxylic acid (a1) and the integrated value of the second dicarboxylic acid (a2) (that is, dicarboxylic acid different from the aliphatic dicarboxylic acid (a1)) in the expression (F1) are each the integrated value of the signal in the following range. In addition, when a plurality of second dicarboxylic acids (a2) are used, the integrated value is the total of the integrated values thereof.
- In the case where the aliphatic dicarboxylic acid (a1) is 3-methylpentanedioic acid (synonym: 3-methylglutaric acid): the integrated value of the signal of 3H of the methyl group in δ1.1 to 1.2 ppm
- In the case where the aliphatic dicarboxylic acid (a1) is methylsuccinic acid: the integrated value of the signal of 3H of the methyl group in δ1.4 to 1.5 ppm
- In the case where the second dicarboxylic acid (a2) is adipic acid: the integrated value of the signal of 4H of the methylene in δ2.5 to 2.6 ppm

- In the case where the second dicarboxylic acid (a2) is terephthalic acid: the integrated value of the signal of 4H of the aromatic ring in δ8.0 to 8.5 ppm
- In the case where the second dicarboxylic acid (a2) is succinic acid: the integrated value of the signal of 4H of the methylene in δ2.8 to 3.0 ppm

Note that the content of the second dicarboxylic acid (a2) was also calculated in the same manner as the above except that the second dicarboxylic acid (a2) (when a plurality of second dicarboxylic acids (a2) were used, the total of the integrated values thereof) was substituted in the numerators.

The content of the aliphatic diol (b1) was calculated according to the following expression (F2) in the same manner as in the above procedure. $\begin{matrix}Ratio of aliphatic diol \left(b1\right) \left(% by mole\right) \\ = \left(Integrated value of aliphatic diol \left(b1\right)/Number of protons\right) \times 100 / \left[\left(\begin{matrix}Integrated value of \\ aliphatic diol \left(b1\right) / Number of protons\end{matrix}\right)+\left(\begin{matrix}Integrated value of second diol \left(b2\right) / Number of \\ protons\end{matrix}\right)\right]\end{matrix}$

However, in the expression (F2), the integrated value of the aliphatic diol (b1) and the integrated value of the second diol (b2) (that is, diol different from aliphatic diol (b1)) are each the integrated value of the signal in the following range. Two or more second diols (b2) are used, the integrated value is the total of the integrated values thereof.
- In the case where the aliphatic diol (b1) is 3-methyl-1,5-pentanediol: the integrated value of the signal of 3H of the methyl group in δ1.0 to 1.2 ppm
- In the case where the second diol (b2) is butanediol: the integrated value of the signal of 4H of the methylene in δ4.5 to 4.7 ppm

### [Measurement of number average molecular weight (Mn) and weight average molecular weight (Mw)]

A size exclusion high performance liquid chromatography apparatus manufactured by Shimadzu Corporation was used to measure the number average molecular weight (Mn) and weight average molecular weight (Mw). The measurement conditions are as follows.

Column: HFIP column "GMHHR-H(S)" manufactured by Tosoh Corporation, two columns connected in series
Standard sample: polymethyl methacrylate resin (PMMA)
Solvent and mobile phase: 1,1,1,3,3,3-hexafluoroisopropanaol (HFIP)
Flow rate: 0.35 mL/min
Temperature: 40°C
Sample solution concentration: 0.1 wt% (filtrated with a filter having a pore size of 0.45 µm)
Injection volume: 10 µL
Detector: LC-20AD (RI detector)

### [Measurement of solution intrinsic viscosity (IV)]

### (Measurement method)

In 20 mL of a solution of phenol/1,1,2,2-tetrachloroethane=50/50% by mass (hereinafter sometimes referred to simply as "solvent"), 0.200 g of a polyester resin was dissolved (hereinafter, "sample solution"). Using a transfer pipet, 10 mL of the solvent was measured and put into a Dilution Type Ubelode Viscometer IC manufactured by Asahi Seisakusho Co. Ltd., and the viscometer was immersed in a water bath at 30°C. The time taken by the liquid surface of the solvent to naturally drop from the upper marked line to the lower marked line was measured (t0). After the measurement of t0, the instrument was dried, and 10 mL of the sample solution was measured and put into the viscosity tube to perform the measurement (t1) in the same manner. After the measurement of t1, 10 mL of the solvent was added to the viscometer to perform measurement in the same manner (t2). After the measurement of t2, 10 mL of the solvent was further added to the viscometer to perform measurement in the same manner (t3).

### (Calculation method)

According to the following expressions (F3) and (F4), ηₛₚₓ (x = 1, 2, 3) was calculated. ${η}_{rx} = tx / t 0$ ${η}_{spx} = {η}_{rx} - 1$

For x = 1, 2, and 3, the sample solution concentration Coₓ (g/dL) was plotted on the horizontal axis and ηₛₚₓ at each concentration was plotted on the vertical axis, and the intercept on the vertical axis was taken as the solution intrinsic viscosity (IV).

### [Production of press film]

Each polyester resin or resin composition of Examples and Comparative Examples was subjected to press molding at 180 to 190°C for 60 seconds to produce a press film having a thickness of 120 to 150 µm. The thickness of each press film was measured by a micrometer.

### [Evaluation of composting ability]

The compositing ability of each polyester resin and resin composition of Examples and Comparative Examples was evaluated by performing a test in the same manner as in JIS K6954:2008 except for using a test cup (outer dimensions: φ96 × 110 mm, material: PP). A simulated compost (synthetic solid waste) was prepared in a composition shown in the following Table 1.

### [Table 1]

**Table 1**

| Classification | Name of article | mass ratio [% by mass] |
|---|---|---|
| Sawdust | Kicoriya granular sawdust 3 mm size | 20 |
| Feed | Rabbit food | 15 |
| Compost | YK-12 | 10 |
| Saccharide | Cellulose | 5 |
| Water | Pure water | 50 |

The test piece was produced by cutting each press film into 15 mm × 15 mm.

Into a cup, 90 g of the simulated compost was weighed, one sheet of the test piece was embedded at the center both in the horizontal direction and the depth direction of the simulated compost, and a lid was put on the cup. The cup was allowed to stand in a thermostat at 58°C. The cup was regularly taken, water was added to restore the initial weight, and the compost was stirred, until the test was completed after 30 days. At the completion of the test, the compost was sieved with sieves of 4.75 mm and 2.0 mm to collect the test piece from the residue, and the test piece was dried. The weight of the test piece was measured and the weight retention rate was calculated based on the weight before the test taken as 100. The case with a weight retention rate of 30% or less was evaluated as "A", the case of 30 to 85% as "B", and the case of 85% or more as "C.

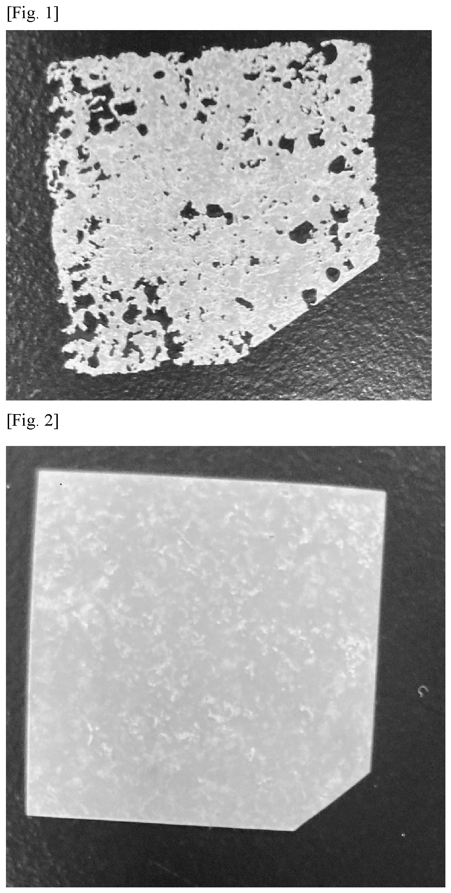

As a reference, photographs of appearance after evaluation of the compositing ability of polyester resins of Examples 2 and Comparative Examples 1 are shown in Fig. 1 (Examples 2) and Fig. 2 (Comparative Examples 1).

### [Evaluation of hydrolysis resistance]

A film produced by a method described in the section of "Production of press film" above was cut into a strip of 20 mm × 60 mm, and the strip was immersed in hot water at 80°C, and was allowed to stand. The film was taken after 7 days, a part cut from the film was dried in a drier at 40°C and 1.3 Pa for 20 hours, and the weight average molecular weight was measured according to the method described above. The molecular weight retention rate was calculated based on the weight average molecular weight before the test taken as 100.

Then, the case with a molecular weight retention rate of 71% or more was evaluated as "A", the case of 61 to 70% as "B", and the case of 60% or less as "C".

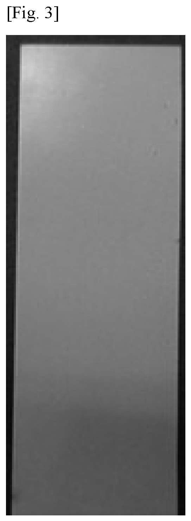

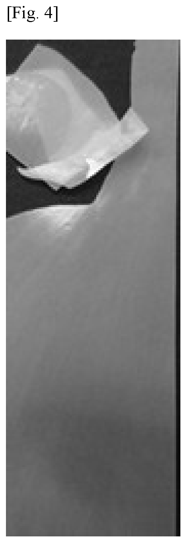

As a reference, photographs of appearance of polyester resins of Examples 5 and Comparative Examples 1 after evaluation of the hydrolysis resistance after 14 days are shown in Fig. 3 (Examples 5) and Fig. 4 (Comparative Examples 1).

### [Comprehensive evaluation of biodegradability and hydrolysis resistance]

The cases where the biodegradability and the hydrolysis resistance were respectively evaluated as "A" and "A", "A" and "B", and "B" and "A" were determined as having a good balance therebetween. The cases where either was evaluated as "C" and the case of both as "B" were determined as not having a good balance therebetween.

### [Evaluation of mechanical properties]

Each film produced by the method described in the section of "Production of press film" above was cut into a dumbbell shape having a width of 10 mm, and was subjected to humidity conditioning under a storage environment of 23°C and 50%RH for one week, and then, the elongation at break was measured using an autograph (AG-5000B manufactured by Shimadzu Corporation) (load cell: 1kN, tensile speed: 500 mm/min (Examples 4, 5, and 6, Comparative Example 3), tensile speed: 5 mm/min (Examples 1 to 3, and 7, Comparative Examples 1 and 2), distance between chucks: 70 mm). The values of the elongation at break shown in Table 3 below were each an average of three measurements.

### [Example 1]

Provided were 5.6 parts by mass of 3-methylpentanedioic anhydride as the aliphatic dicarboxylic acid (a1), 46.7 parts by mass of succinic acid as a second dicarboxylic acid (a2)-1, 47.6 parts by mass of 1,4-butanediol as the aliphatic diol component (B), 0.06 parts by mass of titanium tetrabutoxide as an enzyme, which were then put in a reactor. Next, the mixture was heated at 190°C under a normal pressure in a nitrogen atmosphere to perform an esterification reaction while distilling generated water out of the system.

At the time when the amount of the distilled generated water became little, the pressure was reduced to 0.15 mmHg with a vacuum pump, and a reaction was continued at 200°C, and stirring was stopped at the time when the torque in stirring at 230°C and 180 rpm reached 90 mA. Subsequently, the resin in a molten state was taken with a metal spatula and was allowed to cool, thereby obtaining a polyester resin "PES-1".

### [Example 2]

A polyester resin "PES-2" was obtained by performing a reaction in the same manner as in Example 1 except for changing the amount of 3-methylpentanedioic anhydride to 11.2 parts by mass, the amount of succinic acid to 41.3 parts by mass, and the amount of 1,4-butanediol to 47.4 parts by mass.

### [Example 3]

A polyester resin "PES-3" was obtained by performing a reaction in the same manner as in Example 1 except for changing the amount of 3-methylpentanedioic anhydride to 2.8 parts by mass, the amount of succinic acid to 49.4 parts by mass, and the amount of 1,4-butanediol to 47.7 parts by mass.

### [Example 4]

A polyester resin "PES-4" was obtained by performing a reaction in the same manner as in Example 1 except for using 29.2 parts by mass of 3-methylpentanedioic anhydride as the aliphatic dicarboxylic acid (a1), using 29.5 parts by mass of dimethyl terephthalate as the second dicarboxylic acid (a2)-1, and changing the amount of 1,4-butanediol to 41.3 parts by mass.

### [Example 5]

A polyester resin "PES-5" was obtained by performing a reaction in the same manner as in Example 1 except for using 34.9 parts by mass of 3-methylpentanedioic anhydride as the aliphatic dicarboxylic acid (a1), using 22.7 parts by mass of dimethyl terephthalate as the second dicarboxylic acid (a2)-1, and changing the amount of 1,4-butanediol to 42.4 parts by mass.

### [Example 6]

A polyester resin "PES-6" was obtained by performing a reaction in the same manner as in Example 1 except for using 11.5 parts by mass of methylsuccinic acid as the aliphatic dicarboxylic acid (a1), using 41.2 parts by mass of succinic acid as the second dicarboxylic acid (a2)-1, and changing the amount of 1,4-butanediol to 47.2 parts by mass.

### [Example 7]

Using 100 parts by mass of the PES-2 and 0.2 parts by mass of CARBODILITE HMV-5CA-LC (tradename) manufactured by Nisshinbo Chemical Inc., the resin was charged in Labo Plastomill (registered trademark) manufactured by Toyo Seiki Seisaku-sho, Ltd. over 3 minutes, followed by kneading at 190°C for 5 minutes, and then the molten product was cooled and solidified, thereby obtaining a resin composition.

### [Example 8]

A resin composition was obtained by kneading 100 parts by mass of the PES-4 and 0.2 parts by mass of CARBODILITE HMV-5CA-LC (trade name) manufactured by Nisshinbo Chemical Inc., followed by solidification, in the same manner as in Example 7.

### [Comparative Examples 1]

A polyester resin "PES-7" was obtained by performing a reaction in the same manner as in Example 1 except for not using the aliphatic dicarboxylic acid (a1), using 52.1 parts by mass of succinic acid as the second dicarboxylic acid (a2)-1, and using 47.8 parts by mass of 1,4-butanediol.

### [Comparative Examples 2]

A polyester resin "PES-8" was obtained by performing a reaction in the same manner as in Example 1 except for not using the aliphatic dicarboxylic acid (a1) and using 40.7 parts by mass of succinic acid as the second dicarboxylic acid (a2)-1, 12.6 parts by mass of adipic acid as a second dicarboxylic acid (a2)-2, and 46.7 parts by mass of 1,4-butanediol.

### [Comparative Examples 3]

A polyester resin "PES-9" was obtained by performing a reaction in the same manner as in Example 1 except for not using the aliphatic dicarboxylic acid (a1) and using 34.8 parts by mass of terephthalic acid as the second dicarboxylic acid (a2)-1, 26.2 parts by mass of adipic acid as the second dicarboxylic acid (a2)-2, and 38.9 parts by mass of 1,4-butanediol.

### [Comparative Example 4]

A resin composition was obtained by kneading 100 parts by mass of the PES-7 and 1 part by mass of CARBODILITE HMV-5CA-LC (trade name) manufactured by Nisshinbo Chemical Inc., followed by solidification, in the same manner as in Examples 7.

### [Comparative Example 5]

A resin composition was obtained by kneading 100 parts by mass of the PES-9 and 1 part by mass of CARBODILITE HMV-5CA-LC (trade name) manufactured by Nisshinbo Chemical Inc., followed by solidification, in the same manner as in Examples 7.

### [Example A1]

A polyester resin "PES-10" was obtained by performing a reaction in the same manner as in Example 1 except for not using the aliphatic dicarboxylic acid (a1), using 33.9 parts by mass of dimethyl terephthalate as the second dicarboxylic acid (a2)-1, using 25.5 parts by mass of adipic acid as the second dicarboxylic acid (a2)-2, using 12.4 parts by mass of 3-methyl-1,5-pentanediol as the aliphatic diol (b1), and using 28.2 parts by mass of 1,4-butanediol as the second diol (b2).

### [Example A2]

A polyester resin "PES-11" was obtained by performing a reaction in the same manner as in Example 1 except for not using the aliphatic dicarboxylic acid (a1), using 33.2 parts by mass of dimethyl terephthalate as the second dicarboxylic acid (a2)-1, using 25.0 parts by mass of adipic acid as the second dicarboxylic acid (a2)-2, using 20.2 parts by mass of 3-methyl - 1,5-pentanediol as the aliphatic diol (b1), and using 21.6 parts by mass of 1,4-butanediol as the second diol (b2).

### [Example A3]

A polyester resin "PES-12" was obtained by performing a reaction in the same manner as in Example 1 except for using 11.2 parts by mass of 3-methylpentanedioic anhydride as the aliphatic dicarboxylic acid (a1)-1, using 0.06 parts by mass of methylsuccinic acid as the aliphatic dicarboxylic acid (a1)-2, using 41.3 parts by mass of succinic acid as the second dicarboxylic acid (a2), and using 47.4 parts by mass of 1,4-butanediol as the second diol (b2).

### [Example A4]

A resin composition was obtained by kneading 100 parts by mass of the PES-10 and 0.6 parts by mass of CARBODILITE HMV-5CA-LC (trade name) manufactured by Nisshinbo Chemical Inc., followed by solidification, in the same manner as in Examples 7.

### [Table 2]

**Table 2**

| | Polyester resin | | | | | | | | |
|---|---|---|---|---|---|---|---|---|---|
| | Type | Dicarboxylic acid component (A) | | | | | | | |
| | | First dicarboxylic acid component (A1) | | | | Second dicarboxylic acid component (A2) | | | |
| | | Dicarboxylic acid (a1)-1 | | Dicarboxylic acid (al)-2 | | Dicarboxylic acid (a2)-1 | | Dicarboxylic acid (a2)-2 | |
| | | Type | Content [% by mole] | Type | Content [% by mole] | Type | Content [% by mole] | Type | Content [% by mole] |
| Example 1 | PES-1 | 3-methylpentanedioic anhydride | 10 | - | - | succinic acid | 90 | - | - |
| Example 2 | PES-2 | 3-methylpentanedioic anhydride | 20 | - | - | succinic acid | 80 | - | - |
| Example 3 | PES-3 | 3-methylpentanedioic anhydride | 5 | - | - | succinic acid | 95 | - | - |
| Example 4 | PES-4 | 3-methylpentanedioic anhydride | 57 | - | - | dimethyl terephthalate | 43 | - | - |
| Example 5 | PES-5 | 3-methylpentanedioic anhydride | 70 | - | - | dimethyl terephthalate | 30 | - | - |
| Example 6 | PES-6 | methylsuccinic acid | 20 | - | - | succinic acid | 80 | - | - |
| Comparative Example 1 | PES-7 | - | - | - | - | succinic acid | 100 | - | - |
| Comparative Example 2 | PES-8 | - | - | - | - | succinic acid | 80 | adipic acid | 20 |
| Comparative Example 3 | PES-9 | - | - | - | - | dimethyl terephthalate | 51 | adipic acid | 49 |
| Example A1 | PES-10 | - | - | - | - | dimethyl terephthalate | 52 | adipic acid | 48 |
| Example A2 | PES-11 | - | - | - | - | dimethyl terephthalate | 52 | adipic acid | 48 |
| Example A3 | PES-12 | 3-methylpentanedioic anhydride | 20 | methylsuccinic acid | 0.1 | succinic acid | 80 | - | - |

**Table 2 (continued)**

| | Polyester resin | | | | | | | |
|---|---|---|---|---|---|---|---|---|
| | Type | Aliphatic diol component (B) | | | | Mn [×10³] | Mw [×10³] | **IV** [dl/g] |
| | | First diol component (B1) | | Second diol component (B2) | | | | |
| | | Diol (B1) | | Diol (b2) | | | | |
| | | Type | Content [% by mole] | Type | Content [% by mole] | | | |
| Example 1 | PES-1 | - | - | 1,4-butanediol | 100 | 23.0 | 55.2 | 0.97 |
| Example 2 | PES-2 | - | - | 1,4-butanediol | 100 | 28.0 | 66.0 | 1.01 |
| Example 3 | PES-3 | - | - | 1,4-butanediol | 100 | 21.0 | 48.3 | 0.93 |
| Example 4 | PES-4 | - | - | 1,4-butanediol | 100 | 16.0 | 43.0 | 0.94 |
| Example 5 | PES-5 | - | - | 1,4-butanediol | 100 | 18.0 | 45.0 | 0.94 |
| Example 6 | PES-6 | - | - | 1,4-butanediol | 100 | 27.0 | 64.0 | 1.00 |
| Comparative Example 1 | PES-7 | - | - | 1,4-butanediol | 100 | 28.0 | 68.0 | 1.10 |
| Comparative Example 2 | PES-8 | - | - | 1,4-butanediol | 100 | 26.0 | 63.0 | 0.99 |
| Comparative Example 3 | PES-9 | - | - | 1,4-butanediol | 100 | 15.0 | 37.0 | 0.85 |
| Example A1 | PES-10 | 3-methyl -1,5-pentanediol | 27 | 1,4-butanediol | 73 | 14 | 38 | 0.9 |
| Example A2 | PES-11 | 3-methyl -1,5-pentanediol | 45 | 1,4-butanediol | 55 | 17 | 41 | 0.85 |
| Example A3 | PES-12 | - | - | 1,4-butanediol | 100 | 29 | 68 | 1.1 |

### [Table 3]

**Table 3**

| | Polyester resin or resin composition | | | | Molded article | Evaluation of properties | | |
|---|---|---|---|---|---|---|---|---|
| | Resin | | Anti-hydrolysis agent | | | Compositing ability | Hydrolysis resistance | Mechanical properties |
| | Type | Use amount [parts by mass] | Type | Use amount [parts by mass] | Film thickness [µm] | | | Elongation at break [%] |
| Example 1 | PES-1 | 100 | - | - | 125 | A | B | 20 |
| Example 2 | PES-2 | 100 | - | - | 133 | A | B | 23 |
| Example 3 | PES-3 | 100 | - | - | 128 | A | B | 15 |
| Example 4 | PES-4 | 100 | - | - | 126 | B | A | 700 |
| Example 5 | PES-5 | 100 | - | - | 140 | B | A | 40 |
| Example 6 | PES-6 | 100 | - | - | 136 | A | A | 15 |
| Example 7 | PES-2 | 100 | CARBODILITE | 0.2 | 125 | A | B | 15 |
| Example 8 | PES-4 | 100 | CARBODILITE | 0.2 | 140 | B | A | 600 |
| Comparative Example 1 | PES-7 | 100 | - | - | 145 | C | B | 8 |
| Comparative Example 2 | PES-8 | 100 | - | - | 137 | A | C | 23 |
| Comparative Example 3 | PES-9 | 100 | - | - | 126 | B | C | 475 |
| Comparative Example 4 | PES-7 | 100 | CARBODILITE | 1 | 129 | C | A | 11 |
| Comparative Example 5 | PES-9 | 100 | CARBODILITE | 1 | 140 | C | A | 574 |
| Example A1 | PES-10 | 100 | - | - | 126 | A | B | 256 |
| Example A2 | PES-11 | 100 | - | - | 130 | A | B | 65 |
| Example A3 | PES-12 | 100 | - | - | 127 | A | A | 30 |
| Example A4 | PES-10 | 100 | CARBODILITE | 0.6 | 135 | B | A | 247 |

As shown in Tables 2 and 3, the polyester resins of Examples 1 to 6 and Examples A1 to A3 and the resin compositions of Examples 7 to 8 and Example A4 showed a good hydrolysis resistance and compositing ability.

On the other hand, as shown in Comparative Example 1, PES-7 which was polybutylene succinate had an insufficient compositing ability.

As shown in Comparative Example 2, PES-8 which was polybutylene succinate containing a structure derived from adipic acid had a good compositing ability but was inferior in hydrolysis resistance.

As shown in Comparative Example 3, PES-9 which was polybutylene terephthalate adipate was inferior in compositing ability and hydrolysis resistance.

Furthermore, as shown in Comparative Examples 4 and 5, a resin composition in which PES-7 or PES-9 was used in combination with CARBODILITE had an insufficient compositing ability.

### Industrial Applicability

According to the present invention, it is possible to provide a biodegradable polyester resin, a biodegradable polyester resin composition, and molded bodies thereof, which have superior biodegradability and superior hydrolysis resistance.

The biodegradable polyester resin, the biodegradable polyester resin composition, and the molded bodies thereof are useful for uses in an agricultural multifilm, a compost bag, a food package film, disposable cutlery, and the like.

## Claims

1. A biodegradable polyester resin comprising a structural unit derived from a dicarboxylic acid component (A) and a structural unit derived from an aliphatic diol component (B), the biodegradable polyester resin satisfying at least one of the following Conditions (α) and (β):
- Condition (α): the dicarboxylic acid component (A) contains a first dicarboxylic acid component (A1) constituted of at least one compound selected from the group consisting of an aliphatic dicarboxylic acid (a1) represented by the following formula (I) and a derivative thereof,
- Condition (β): the aliphatic diol component (B) contains a first aliphatic diol component (B1) constituted of at least one compound selected from an aliphatic diol (b1) represented by the following formula (II): 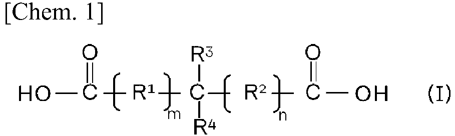 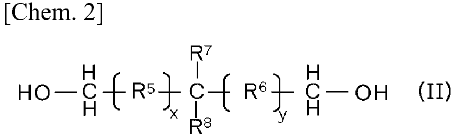
wherein R¹, R², R⁵, and R⁶ each independently represent a divalent hydrocarbon group having 1 to 3 carbon atoms, R³ and R⁷ each independently represent a monovalent hydrocarbon group having 1 to 3 carbon atoms, R⁴ and R⁸ each independently represent a hydrogen atom or a monovalent hydrocarbon group having 1 to 3 carbon atoms, and m, n, x, and y each independently represent 0 or 1.

2. The biodegradable polyester resin according to claim 1, wherein the dicarboxylic acid component (A) comprises the first dicarboxylic acid component (A1) and a second dicarboxylic acid component (A2) constituted of one compound selected from the group consisting of a second dicarboxylic acid (a2) different from the aliphatic dicarboxylic acid (a1) and a derivative thereof, and
the biodegradable polyester resin satisfies the following Condition (i) or (ii):
- Condition (i): the dicarboxylic acid contained in the second dicarboxylic acid component (A2) and the aliphatic diol contained in the aliphatic diol component (B) both have 4 or less carbon atoms,
- Condition (ii): the second dicarboxylic acid component (A2) contains an aromatic dicarboxylic acid.

3. The biodegradable polyester resin according to claim 2, wherein the second dicarboxylic acid component (A2) comprises an aromatic dicarboxylic acid.

4. The biodegradable polyester resin according to any one of claims 1 to 3, wherein the dicarboxylic acid component (A) has a content of the aliphatic dicarboxylic acid (a1) of 2 to 60% by mole.

5. The biodegradable polyester resin according to any one of claims 1 to 4, wherein in the formula (I), R¹ and R² are both a methylene group.

6. The biodegradable polyester resin according to any one of claims 1 to 5, wherein in the formula (I), R³ is a methyl group and R⁴ is a hydrogen atom.

7. The biodegradable polyester resin according to any one of claims 1 to 6, wherein the aliphatic diol component (B) has a content of the first aliphatic diol component (B1) of 2 to 50% by mole.

8. The biodegradable polyester resin according to any one of claims 1 to 7, wherein in formula (II), R⁵ and R⁶ are a methylene group.

9. The biodegradable polyester resin according to any one of claims 1 to 8, wherein in the formula (II), R⁷ is a methyl group and R⁸ is a hydrogen atom.

10. The biodegradable polyester resin according to any one of claims 1 to 9, wherein the dicarboxylic acid component (A) does not contain an aliphatic dicarboxylic acid (a2X) which has a branched alkylene group having a hydroxy group, or the dicarboxylic acid component (A) has a content of the aliphatic dicarboxylic acid (a2X) of more than 0% by mole and 3% by mole or less.

11. The biodegradable polyester resin according to any one of claims 1 to 10, wherein the dicarboxylic acid component (A) comprises
the first dicarboxylic acid component (A1),
a second dicarboxylic acid component (A2) constituted of one compound selected from the group consisting of a second dicarboxylic acid (a2) different from the aliphatic dicarboxylic acid (a1) and a derivative thereof, and
a third dicarboxylic acid component (A3) constituted of one compound selected from the group consisting of a third dicarboxylic acid (a3) different from the aliphatic dicarboxylic acid (a1) and from the second dicarboxylic acid (a2) and a derivative thereof.

12. The biodegradable polyester resin according to claim 11, wherein the third dicarboxylic acid (a3) is methylsuccinic acid.

13. A biodegradable polyester resin composition comprising the biodegradable polyester resin according to any one of claims 1 to 12 and an anti-hydrolysis agent (C).

14. The biodegradable polyester resin composition according to claim 13, wherein the anti-hydrolysis agent (C) is a carbodiimide compound.

15. The biodegradable polyester resin composition according to claim 13 or 14, wherein the anti-hydrolysis agent (C) is contained in an amount of 0.15 to 2 parts by mass relative to 100 parts by mass of the biodegradable polyester resin.

16. A molded body comprising the biodegradable polyester resin according to any one of claims 1 to 12 or the biodegradable polyester resin composition according to any one of claims 13 to 15.

17. A film comprising the biodegradable polyester resin according to any one of claims 1 to 12 or the biodegradable polyester resin composition according to any one of claims 13 to 15.

18. A sheet comprising the biodegradable polyester resin according to any one of claims 1 to 12 or the biodegradable polyester resin composition according to any one of claims 13 to 15.

19. A food tool comprising the biodegradable polyester resin according to any one of claims 1 to 12 or the biodegradable polyester resin composition according to any one of claims 13 to 15.

20. A plastic modifier comprising the biodegradable polyester resin according to any one of claims 1 to 12 or the biodegradable polyester resin composition according to any one of claims 13 to 15.

21. A coating agent comprising the biodegradable polyester resin according to any one of claims 1 to 12 or the biodegradable polyester resin composition according to any one of claims 13 to 15.
